# EUROPEAN PATENT SPECIFICATION

(11) **EP 2 509 364 B1**
(45) Date of publication and mention of the grant of the patent: **11.12.2013**
(21) Application number: 11305419.1
(22) Date of filing: 08.04.2011
(51) Int. Cl.: H04W 88/06, H04W 88/08, H04W 36/18

(54) **Transmission method and mobile station to carry out the method**
Übertragungsverfahren und mobile Station zum Ausführen des Verfahrens
Procédé de transmission et station mobile pour exécuter le procédé

(43) Date of publication of application: 10.10.2012
(73) Proprietor: Alcatel Lucent, 75007 Paris (FR)
(72) Inventor: Wong, Shin Horng, Chippenham, Wiltshire SN14 0SP (GB); Baker, Matthew, Canterbury, Kent CT2 9DB (GB)
(74) Representative: Lück, Stephan

(56) References cited:
- US-A1- 2008 151 798
- HUAWEI ET AL: "Initial considerations on Uplink Closed Loop Transmit Diversity", 3GPP DRAFT; R1-110309 INITIAL CONSIDERATIONS ON UPLINK CLOSED LOOP TRANSMIT DIVERSITY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dublin, Ireland; 20110117, 13 January 2011 (2011-01-13), XP050475357, [retrieved on 2011-01-13]
- QUALCOMM INCORPORATED: "Physical Layer Design Considerations for CLTD", 3GPP DRAFT; R1-110118_PHY_LAYER_DESIGN_CONSIDERATIONS_ CLTD, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dublin, Ireland; 20110117, 11 January 2011 (2011-01-11), XP050490082, [retrieved on 2011-01-11]
- "Cosed Loop UL TxDiv feedback generation in Soft Handover", 3GPP TSG-RAN WG1 #65,, 9 May 2011 (2011-05-09), pages 1-6, XP007919373,

## Description

### BACKGROUND OF THE INVENTION

The present invention relates to the field of wireless cellular communication networks, and more particularly to a method for transmitting in transmit diversity mode in a mobile station of a wireless cellular communication network.

In the 3rd Generation Partnership Project (3GPP) draft R1-110309, initial considerations on a work item within 3GPP related to the closed loop uplink transmit diversity are described.

In the published patent application US 2008/0151798 A1, a method for reducing the power consumption of a mobile terminal by selectively switching between a diversity mode and a non diversity mode is disclosed.

The term "wireless cellular communication network" as used herein refers to any type of radio (or wireless) cellular network, in particular, GSM ("Global System for Mobile communications"), UMTS (« Universal Mobile Telecommunications System »), CDMA, CDMA 2000 (3GPP2), FDD ("Frequency Division Duplex"), TDD ("Time Division Duplex"), WiMAX, evolved-UTRAN (also known as "Long Term Evolution" or LTE).

The term "mobile station" as used herein refers to any type of fixed or mobile (or portable) communication terminal (such as, for example, portable, pocket, hand-held, computer-included or car-mounted mobile devices) capable of exchanging data with a radio-communication network on a radio-communication link. Consequently, it may be, among other things, a mobile telephone apparatus (also referred to as "cellular phone" or "smartphone"), a laptop computer or personal digital assistant (PDA) equipped with a radio communication interface, a server or local router equipped with a radio communication interface, a high-frequency radio receiver, or a terrestrial or satellite television receiver. In UMTS and LTE systems, the mobile station is referred to as "User Equipment" (UE).

In a typical cellular wireless communication system, mobile stations communicate via a radio access network (RAN) with one or more core networks. The radio access network provides radio coverage spanning a geographical area which is divided into cell areas, with each cell area being served by a radio access node, such as a base station. A cell is a geographical area where radio coverage is provided by a base station equipment at a base station site. The radio access nodes and mobiles stations are adapted for communicating over the air interface when a mobile station is within radio coverage of a cell served by a radio access node or base stations site.

The radio access network infrastructure of a cellular wireless communication system typically comprises base stations distributed over the covered territory for communicating with mobile stations located in the zones, or cells, that they serve. The macrodiversity technique consists in providing for a mobile station the ability to communicate simultaneously with separate base stations in such a way that, in the downlink direction (from the base stations to the mobile stations), the mobile stations receive the same information several times and, in the uplink direction, the signal transmitted by the mobile station is picked up by the base stations in order to form different estimates that can then be combined in the network infrastructure.

Macrodiversity procures increased reception that improves the performance of the system due to the combination of different observations of a same information item. It also makes it possible to carry out soft intercellular transfer ("soft handoff", or SHO) when the mobile station is moving. Macrodiversity techniques are provided in the UMTS system, in the context of wideband CDMA (W-CDMA) for frequency duplex communications (FDD). For example, the fact that a radio signal value transmitted by a UE is received by several Node-Bs is referred to as macrodiversity on the uplink, and such macrodisveristy results from the reception of an estimate of radio signal transmitted from the UE, through a so-called "active set" of Node-Bs.

Moreover, in a cellular wireless communication system using spatial transmit diversity, data are transmitted over the air interface by a transmitter using n transmit antennas where n ≥ 2, to a receiver using m receive antennas where m ≥ 1. Several transmit diversity scheme have been defined, such as for example the space-time transmit diversity scheme (STTD) specified for by the 3GPP for cellular wireless communication systems of the UMTS type. Other transmit diversity schemes, known as closed loop transmit diversity schemes, have been specified for UMTS, in which the same spread spectrum signal is transmitted on each of the n transmit antennas, with transmit parameters determined based on feedback data provided by the receiver which reflects the quality of the received signal. Usually, such feedback data is calculated based on impulse response estimates corresponding to propagation channels for each of the antennas. The transmitter station applies parameters (reflecting a phase shift or a phase shift and a gain) on each transmit antenna so that the signals transmitted from the different antennas reach the receiver without any significant phase difference. Such a transmit diversity scheme in which the transmitter station transmits on each transmit antenna with weights calculated from the feedback data is also referred to as "beamforming transmit diversity".

In the present description, the invention will be described more particularly in its application, non limiting, to third generation communication networks of the UMTS type. In this system, the invention finds application within the framework of the so-called "High Speed Downlink Packet Access" (HSDPA) feature, currently being specified by the 3GPP (3rd Generation Partnership Project), an overall description of which may be found in the 3GPP 25.308 technical specification "UTRA High Speed Downlink Packet Access (HSDPA); Overall Description; Stage 2 (Release 10)", version 10.4.0, published in March 2011 by the 3GPP. HSDPA allows high rate downlink transmission, i.e. from a base station to a mobile station, of data to a set of mobile stations (UEs) located in the coverage area of the base station.

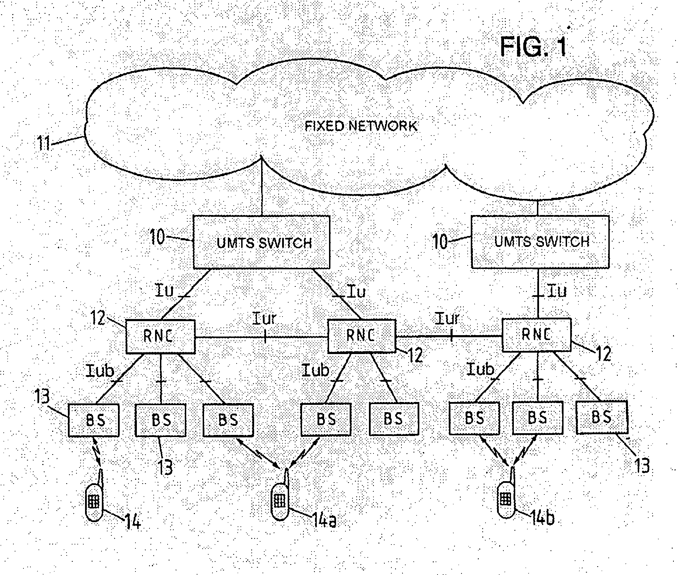

FIG. 1 shows the architecture of such a UMTS network. The switches of the mobile service 10, belonging to a core network (CN), are linked on the one hand to one or more fixed networks 11 and on the other hand, by means of a so-called lu interface, to command equipment 12 or RNCs ("Radio Network Controllers"). Each RNC 12 is linked to one or more base stations 13 by means of a so-called lub interface. The base stations 13, distributed over the territory covered by the network, are capable of communicating by radio with the mobile terminals 14, 14a, 14b called UE ("User Equipment"). The base stations can be grouped together to form nodes called "node B". Certain RNCs 12 may furthermore communicate with one another by means of a so-called lur interface. The RNCs and the base stations form an access network called UTRAN ("UMTS Terrestrial Radio Access Network").

The UTRAN comprises elements of layers 1 and 2 of the ISO model with a view to providing the links required on the radio interface (called Uu), and a stage 15A for controlling the radio resources (RRC, "Radio Resource Control") belonging to layer 3, as is described in the 3GPP TS 25.301 technical specification "Radio Interface Protocol Architecture", version 6.0.0, Release 6, published in January 2004 by the 3GPP. In view of the higher layers, the UTRAN acts simply as a relay between the UE and the CN.

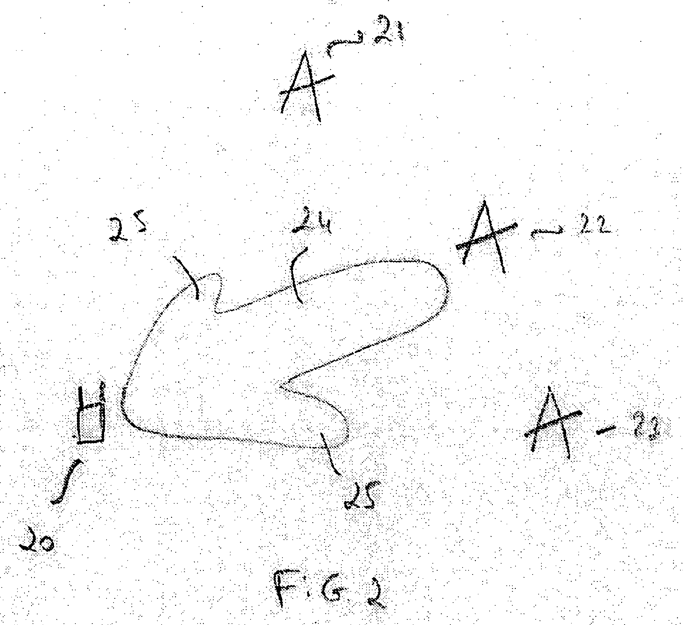

In a closed loop uplink transmit diversity system of the UMTS type, the UE transmits radio signals to the Node-B(s) using more than one antenna, and uses feedback information provided by the Node-B to determine the transmission parameters. The Node-B determines a set of transmit diversity (TxDiv) weights based on estimations of the uplink propagation channel, and signals these determined weights to the UE, which in turn uses the received TxDiv weights on its susbsequent transmission. In beamforming transmit diversity schemes, the weights are selected to give the maximum possible gain with the given propagation channel so as to focus a transmission beam from the UE to the serving Node-B. Focusing most of the transmission energy to a specific Node-B will also result in attenuated transmission to other Node-Bs as shown in Figure 2. Typically this gives a gain to the Node-B of interest whilst reducing interferences to the other Node-Bs.

However, in soft handover, a UE will be in communication with more than one Node-B and thus beamforming the transmission to one Node-B (e.g. the serving Node-B) would result in attenuated transmission to the other Node-Bs (e.g. the non-serving Node-Bs). Since soft handover provides gain to the UE at the cell boundaries, the effect of beamforming transmit diversity reduces this soft handover gain. While it would be possible that the non-serving Node-Bs also provide transmit diversity weights to the UE so that the UE can determine the best weights to be used that would maximize gain for all Node-Bs, this is subject to availability of non-serving Node-Bs providing transmit diversity weights. Therefore there is a need to maximize the soft handover gain for a UE performing beamforming, and not receiving transmit diversity weight feedback from the non-serving Node-Bs.

### SUMMARY OF THE INVENTION

The present invention provides a method according to claim 1, a method according to claim 3, a mobile station according to claim 4, a mobile station according to claim 6, and a computer readable medium according to claim 7. According to one embodiment, the invention proposes a method, in a cellular radio-communication system comprising a core network and an access network, the access network comprising base stations for providing wireless links to at least one mobile station, the mobile station being capable of operating in a first transmission mode in which beamforming transmit diversity is not used and in a second transmission mode in which beamforming transmit diversity is used, the method comprising switching from the second transmission mode to the first transmission mode upon determining that at least one predetermined criterion related to the mobile station operation in soft handover is satisfied.

The criterion or one of the criteria based on which the decision to switch from the second transmission mode to the first transmission mode may be defined so that it is satisfied if the number of base stations in the active set of the mobile station when operating in soft handover exceeds a predetermined threshold.

An additional criterion might be defined so that it is satisfied if one considers only, for application of the above-mentioned criterion, those base stations in the active set of the mobile station when operating in soft handover for which the radio link with the mobile station exceeds a predetermined quality threshold.

The criterion or one of the criteria based on which the decision to switch from the second transmission mode to the first transmission mode may be defined so that it is satisfied if a request message for switching from the second transmission mode to the first transmission mode is received from the access network.

Another embodiment provides a mobile station, in a cellular radio-communication system comprising a core network and an access network, the access network comprising base stations for providing wireless links to at least one mobile station, comprising an antenna system comprising at least two antennas for transmission in beamforming transmit diversity mode, a radio module adapted for operating in a first transmission mode in which beamforming transmit diversity is not used and in a second transmission mode in which beamforming transmit diversity is used, and a control module adapted for determining that at least one predetermined criterion related to the mobile station operation in soft handover is satisfied and for, responsive to said determination, switching the operation of the radio module from the second transmission mode to the first transmission mode upon.

The control module may be further adapted for determining that at least one predetermined criterion is satisfied if the number of base stations in the active set of the mobile station when operating in soft handover exceeds a predetermined threshold.

The control module may also be further adapted for determining that at least one predetermined criterion is satisfied if the number of base stations in the active set of the mobile station when operating in soft handover, and for which the radio link with the mobile station exceeds a predetermined quality threshold, exceeds a predetermined threshold.

The control module may be further adapted for determining that at least one predetermined criterion is satisfied if a request message for switching from the second transmission mode to the first transmission mode is received from the access network.

The methods proposed herein may advantageously be embodied in a Universal Mobile Telecommunications System (UMTS) wireless communication system, the mobile station being a UMTS capable User Equipment.

Another embodiment provides a computer readable medium having processor executable instructions thereon for implementation by a processor, the instructions executing the above-mentioned methods.

### BRIEF DESCRIPTION OF THE DRAWINGS

Other features and advantages of the invention will become apparent from the following description of non-limiting exemplary embodiments, with reference to the appended drawings, in which:
- FIG. 1 is a diagram of a UMTS network to which the invention may be applied;
- FIG. 2 is a diagram showing a UE beamforming to a serving Node-B and attenuating transmission to non-serving Node-Bs;

### DESCRIPTION OF PREFERRED EMBODIMENTS

The invention will now be described in further details in the framework of the UMTS HSDPA feature.

It is proposed to turn off (or disable) the transmit diversity function at the UE when one or several criteria related to the UE's operation in soft handover are satisfied. The following embodiments provide example of those criteria and the way they can be combined with each other. The decision to turn transmit diversity back on may also further be linked to part or all of those additional criteria. The overall gain achieved by using soft handoff without transmit diversity may indeed be greater than that when transmit diversity is used. Switching off transmit diversity (and therefore transmitting from only one antenna at a time) results in a more uniform transmission radiation pattern which is less sensitive to the Node-B location(s).

The terms "turn off", "switch off", "disable" as used herein for the transmit diversity function of the UE refer to the transition from one state in which the UE transmits using a transmit diversity scheme by means of a plurality of antennas, to another state in which the UE does not transmit using a transmit diversity scheme.

In a first embodiment, the UE switches off transmit diversity if the number of cells in its active set becomes greater than a predetermined threshold. In this embodiment, if such predetermined threshold is set equal to one, then the transmit diversity will be switched off whenever the UE is in soft handoff. This predetermined threshold may be specified in the initial UE configuration, or set (and also possibly updated at a later stage) and signalled to the UE by the infrastructure network.

In a second embodiment, the UE switches off transmit diversity if the number of cells in its active set becomes greater than a predetermined threshold and a signal quality criterion is satisfied for one or more of the cells in the active set. This signal quality criterion might comprise the signal quality of the second cell being within a predetermined distance (e.g. X dB) from the signal quality of the strongest cell (or of the serving cell - corresponding to the serving Node-B) for a predetermined period of time (e.g. T seconds). The signal quality might comprise the received SINR or another similar metric.

It should be noted that the UE may notify its serving Node-B that it has switched to a transmission mode in which transmit diversity is no longer used. This autonomous disabling of transmit diversity at the UE followed by a notification to the UTRAN allows for a faster response, and utilizes the SHO gain as soon as it is higher than that of beamforming transmit diversity.

The UE may also turn beamforming transmit diversity back on and inform its serving Node-B if none of the non-serving Node-Bs shows a signal quality which is within a predetermined distance (e.g. X' dB) from that of the serving Node-B for a predetermined time period (e.g. T' seconds). In the examples provided above, the parameters X and X', and T and T', respectively, may be chosen equal.

In a third embodiment, instead of having the UE autonomously disabling transmit diversity when certain predefined criteria are satisfied, the UE triggers an indication, e.g. in the form of a layer 1 signal, MAC message or a RRC measurement report to the UTRAN, when the criteria are satisfied. Upon receipt of such indication, the Node-B sends to the UE a request message (preferably carried by a "fast" signal such as an HS-SCCH order, or alternatively an RRC reconfiguration message) to disable beamforming transmit diversity at the UE.

In a fourth embodiment, receipt of the above-described request message to disable beamforming transmit diversity at the UE from the Node-B constitutes one criterion among others on which the decision to disable beamforming transmit diversity is based.

The combination of the third and the fourth embodiments avoids the UTRAN having continuously to compare and evaluate the relative gains of beamforming transmit diversity and soft handover. The indication from the UE provided in the third embodiment enables the UTRAN to compare and evaluate the relative gains of beamforming transmit diversity and soft handover only upon receipt of this indication. In this regard it should be noted that the UTRAN has knowledge of the soft handover gain, and the Node-B (in the UTRAN) has knowledge of the beamforming transmit diversity gain since it knows the propagation channel and the transmit diversity weights used. Determining an estimate of the gain of each scheme is therefore possible at the network. This saves significant processing at the UTRAN side since a comparison would be required for each UE if the indication was not available. If, based on this comparison, it is determined that beamforming transmit diversity is not worth maintaining for a given UE, the UTRAN can send a message to such UE requesting that beamforming transmit diversity be disabled.

The UE may also trigger an indication to the UTRAN if none of the non-serving Node-Bs shows a signal quality which is within a predetermined distance (e.g. X' dB) from that of the serving Node-B for a predetermined time period (e.g. T' seconds). In the examples provided above, the parameters X and X', and T and T', respectively, may be chosen equal. The UTRAN can then send a signal to the UE requesting that the beamforming transmit diversity be turned back on, and the UTRAN can once again stop comparing the gains between beamforming transmit diversity and soft handover.

In a fifth embodiment, the beamforming transmit diversity function is turned off when the UE is changing serving cell (or serving Node-B). A change in serving cell usually occurs when one of the non-serving cells has a better signal quality than that of the serving cell. Hence, during this period, it is beneficial that the transmission to the target serving cell (i.e. the cell that will become the new serving cell of the UE) is not attenuated. Once the UE has successfully moved over to the new serving cell, the new serving cell can restart beamforming transmit diversity for this UE.

On FIG. 2 is shown a UE (20) connected to a serving Node-B (22), and two non-serving Node-Bs (21, 23). The UE 20 transmits to the Node-Bs using beamforming transmit diversity, and the transmission beam, focused on the serving Node-B (22) for one part (24) and attenuating through its shape transmission to the non-serving Node-Bs (21, 23) in other portions of the beam (25) is also illustrated on the figure. As part of the existing UE soft handover procedure, the UE (20) will measure the CPICH quality of its serving Node-B (22) and non-serving Node-Bs (21, 23). The UE (20) is capable of operating in a first transmission mode in which beamforming transmit diversity is not used and in a second transmission mode in which beamforming transmit diversity is used. It comprises an antenna system comprising at least two antennas for transmission in beamforming transmit diversity mode, connected to a radio module adapted for operating in a first transmission mode in which beamforming transmit diversity is not used and in a second transmission mode in which beamforming transmit diversity is used. The radio module is in turn connected to a control module which includes a processor and memory means. An event is set at the control module to trigger if any of the non-serving Node-Bs (21, 23) CPICH quality is within 2 dB of that of the serving Node-B (22) for more than 1 second. Note that an existing event such as Event 1d (currently defined as one of the events for intra-frequency measurement reporting, for change of best cell) could be used for this purpose if its parameters are adapted. In this example we assume that the first event trigger results in the following measurements: the CPICH measured signal quality (signal strength in dB) is, for Node-B 21, -90dB, for Node-B 22, -91.5dB and for Node-B 23, - 94dB. The UTRAN has knowledge of the gains of the soft handover. These gains altogether with the measurements from the event trigger are provided to the Node-B 22. The Node-B 22 evaluates the gains from several TTI obtained using beamforming transmit diversity and we assume that the gain from beamforming transmit diversity is higher than that of the soft handover. In such case no action is required. Upon occurrence of another event trigger, the following measurements are obtained: the CPICH measured signal quality (signal strength in dB) is, for Node-B 21, -90dB, for Node-B 22, -91dB and for Node-B 23, -91,5dB. At this point, the gains achieved from soft handover via the non-serving Node-Bs, in our example Node-B 21 and Node-B 23, re estimated to be higher than that of beamforming transmit diversity. The serving Node-B 22 then sends a HS-SCCH order to the UE 20 to turn off beamforming transmit diversity, i.e. to switch to a transmission mode in which transmit diversity is not used.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the FIGs., including any functional blocks referred to or labeled as "processor", "controller" or "control module", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor", "control module" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

## Claims

1. A method, in a cellular radio-communication system comprising a core network (10, 11) and an access network (12, 13), the access network comprising base stations (13, 21, 22, 23) for providing wireless links to at least one mobile station (14, 14a, 14b, 20), the mobile station (14, 14a, 14b, 20) being capable of operating in a first transmission mode in which beamforming transmit diversity is not used and in a second transmission mode in which beamforming transmit diversity is used, **characterized in that** the method comprises switching from the second transmission mode to the first transmission mode upon determining that at least one predetermined criterion related to the mobile station (14, 14a, 14b, 20) operation in soft handover is satisfied, wherein at least one predetermined criterion is satisfied if the number of base stations (13, 21, 22, 23) in the active set of the mobile station (14, 14a, 14b, 20) when operating in soft handover exceeds a predetermined threshold.

2. A method according to claim 1, wherein at least one predetermined criterion is satisfied if the number of base stations (13, 21, 22, 23) in the active set of the mobile station (14, 14a, 14b, 20) when operating in soft handover, and for which the radio link with the mobile station (14, 14a, 14b, 20) exceeds a predetermined quality threshold, exceeds a predetermined threshold.

3. A mobile station (14, 14a, 14b, 20), in a cellular radio-communication system comprising a core network (10, 11) and an access network (12, 13), the access network (12, 13) comprising base stations (13, 21, 22, 23) for providing wireless links to at least one mobile station (14, 14a, 14b, 20), comprising:
- an antenna system comprising at least two antennas for transmission in beamforming transmit diversity mode;
- a radio module adapted for operating in a first transmission mode in which beamforming transmit diversity is not used and in a second transmission mode in which beamforming transmit diversity is used;
**characterized in that** the mobile station (14, 14a, 14b, 20) comprises
- a control module adapted for determining that at least one predetermined criterion related to the mobile station (14, 14a, 14b, 20) operation in soft handover is satisfied and for, responsive to said determination, switching the operation of the radio module from the second transmission mode to the first transmission mode, wherein the control module is further adapted for determining that at least one predetermined criterion is satisfied if the number of base stations (13, 21, 22, 23) in the active set of the mobile station (14, 14a, 14b, 20) when operating in soft handover exceeds a predetermined threshold.

4. A mobile station (14, 14a, 14b, 20) according to claim 3 wherein the control module is further adapted for determining that at least one predetermined criterion is satisfied if the number of base stations (13, 21, 22, 23) in the active set of the mobile station (14, 14a, 14b, 20) when operating in soft handover, and for which the radio link with the mobile station (14, 14a, 14b, 20) exceeds a predetermined quality threshold, exceeds a predetermined threshold.

5. A computer readable medium having processor executable instructions thereon for implementation by a processor, the instructions executing a method according to claim 1 or 2.

## Patentansprüche

1. Verfahren in einem zellularen Funkkommunikationssystem mit einem Kernnetzwerk (10, 11) und einem Zugangsnetzwerk (12, 13), wobei das Zugangsnetzwerk Basisstationen (13, 21, 22, 23) zum Bereitstellen von drahtlosen Verbindungen an mindestens eine Mobilstation (14, 14a, 14b, 20) umfasst, wobei die Mobilstation (14, 14a, 14b, 20) für den Betrieb in einem ersten Übertragungsmodus, in welchem keine strahlformende Sende-Diversity verwendet wird, und für den Betrieb in einem zweiten Übertragungsmodus, in welchem strahlformende Sende-Diversity verwendet wird, ausgelegt ist, **dadurch gekennzeichnet, dass** das Verfahren das Umschalten von dem zweiten Übertragungsmodus in den ersten Übertragungsmodus, nachdem ermittelt wurde, dass mindestens ein vorbestimmtes Kriterium in Bezug auf den Soft-Handover-Betrieb der Mobilstation (14, 14a, 14b, 20) erfüllt ist, umfasst, wobei das mindestens eine vorbestimmte Kriterium erfüllt ist, wenn die Anzahl der Basisstationen (13, 21, 22, 23) in dem aktiven Satz der Mobilstation (14, 14a, 14b, 20) im Soft-Handover-Betrieb einen vorbestimmten Grenzwert überschreitet.

2. Verfahren nach Anspruch 1, wobei mindestens ein vorbestimmtes Kriterium erfüllt ist, wenn die Anzahl der Basisstationen (13, 21, 22, 23) in dem aktiven Satz der Mobilstation (14, 14a, 14b, 20) im Soft-Handover-Betrieb, und für welchen die Funkverbindung mit der Mobilstation (14, 14a, 14b, 20) einen vorbestimmten Qualitätsgrenzwert überschreitet, einen vorbestimmten Grenzwert überschreitet.

3. Mobilstation (14, 14a, 14b, 20) in einem zellularen Funkkommunikationssystem mit einem Kernnetzwerk (10, 11) und einem Zugangsnetzwerk (12, 13), wobei das Zugangsnetzwerk (12, 13) Basisstationen (13, 21, 22, 23) zum Bereitstellen von drahtlosen Verbindungen an mindestens eine Mobilstation (14, 14a, 14b, 20) umfasst, umfassend:
- Ein Antennensystem mit mindestens zwei Antennen für die Übertragung im strahlformenden Sende-Diversity-Modus;
- Ein Funkmodul, welches für den Betrieb in einem ersten Übertragungsmodus, in welchem keine strahlformende Sende-Diversity verwendet wird, und für den Betrieb in einem zweiten Übertragungsmodus, in welchem strahlformende Sende-Diversity verwendet wird, ausgelegt ist;
**dadurch gekennzeichnet, dass** die Mobilstation (14, 14a, 14b, 20) umfasst:
- Ein Steuermodul, welches dazu ausgelegt ist, zu bestimmen, dass mindestens ein vorbestimmtes Kriterium in Bezug auf den Soft-Handover-Betrieb der Mobilstation (14, 14a, 14b, 20) erfüllt ist, und den Betrieb des Funkmoduls in Reaktion auf das besagte Bestimmen von dem zweiten Übertragungsmodus in den ersten Übertragungsmodus umzuschalten, wobei das Steuermodul weiterhin dazu ausgelegt ist, zu bestimmen, dass mindestens ein vorbestimmtes Kriterium erfüllt ist, wenn die Anzahl der Basisstationen (13, 21, 22, 23) in dem aktiven Satz der Mobilstation (14, 14a, 14b, 20) im Soft-Handover-Betrieb einen vorbestimmten Grenzwert überschreitet.

4. Mobilstation (14, 14a, 14b, 20) nach Anspruch 3, wobei das Steuermodul weiterhin dazu ausgelegt ist, zu bestimmen, dass mindestens ein vorbestimmtes Kriterium erfüllt ist, wenn die Anzahl der Basisstationen (13, 21, 22, 23) in dem aktiven Satz der Mobilstation (14, 14a, 14b, 20) im Soft-Handover-Betrieb, und für welche die Funkverbindung mit der Mobilstation (14, 14a, 14b, 20) einen vorbestimmten Qualitätsgrenzwert überschreitet, einen vorbestimmten Grenzwert überschreitet.

5. Computerlesbares Medium, auf welchem prozessorausführbare Befehle zur Ausführung durch einen Prozessor gespeichert sind, wobei die Befehle ein Verfahren gemäß Anspruch 1 oder 2 ausführen.

## Revendications

1. Procédé, dans un système de radiocommunication cellulaire comprenant un réseau central (10, 11) et un réseau d'accès (12, 13), le réseau d'accès comprenant des stations de base (13, 21, 22, 23) pour réaliser des liaisons sans fil avec au moins une station mobile (14, 14a, 14b, 20), la station mobile (14, 14a, 14b, 20) étant capable de fonctionner dans un premier mode d'émission dans lequel la diversité d'émission à synthèse de faisceau n'est pas utilisée et dans un deuxième mode d'émission dans lequel la diversité d'émission à synthèse de faisceau est utilisée, **caractérisé en ce que** le procédé comprend la commutation du deuxième mode d'émission au premier mode d'émission lors de la détermination qu'au moins un critère prédéterminé en rapport avec le fonctionnement de la station mobile (14, 14a, 14b, 20) en transfert intercellulaire en diversité est satisfait, au moins un critère prédéterminé étant satisfait si le nombre de stations de base (13, 21, 22, 23) dans l'ensemble actif de stations mobiles (14, 14a, 14b, 20) lors du fonctionnement en transfert intercellulaire en diversité dépasse un seuil prédéterminé.

2. Procédé selon la revendication 1, selon lequel au moins un critère prédéterminé est satisfait si le nombre de stations de base (13, 21, 22, 23) dans l'ensemble actif de stations mobiles (14, 14a, 14b, 20) lors du fonctionnement en transfert intercellulaire en diversité, et pour lesquelles la liaison radio avec la station mobile (14, 14a, 14b, 20) dépasse un seuil de qualité prédéterminé, dépasse un seuil prédéterminé.

3. Station mobile (14, 14a, 14b, 20), dans un système de radiocommunication cellulaire comprenant un réseau central (10, 11) et un réseau d'accès (12, 13), le réseau d'accès (12, 13) comprenant des stations de base (13, 21, 22, 23) pour réaliser des liaisons sans fil avec au moins une station mobile (14, 14a, 14b, 20), comprenant :
- un système d'antenne comprenant au moins deux antennes pour l'émission en mode diversité d'émission à synthèse de faisceau ;
- un module hertzien adapté pour fonctionner dans un premier mode d'émission dans lequel la diversité d'émission à synthèse de faisceau n'est pas utilisée et dans un deuxième mode d'émission dans lequel la diversité d'émission à synthèse de faisceau est utilisée ;
**caractérisée en ce que** la station mobile (14, 14a, 14b, 20) comprend
- un module de commande adapté pour déterminer qu'au moins un critère prédéterminé en rapport avec le fonctionnement de la station mobile (14, 14a, 14b, 20) en transfert intercellulaire en diversité est satisfait et pour, en réaction à ladite détermination, commuter le fonctionnement du module hertzien du deuxième mode d'émission au premier mode d'émission, le module de commande étant en outre adapté pour déterminer qu'au moins un critère prédéterminé est satisfait si le nombre de stations de base (13, 21, 22, 23) dans l'ensemble actif de stations mobiles (14, 14a, 14b, 20) lors du fonctionnement en transfert intercellulaire en diversité dépasse un seuil prédéterminé.

4. Station mobile (14, 14a, 14b, 20) selon la revendication 3, avec laquelle le module de commande est en outre adapté pour déterminer qu'au moins un critère prédéterminé est satisfait si le nombre de stations de base (13, 21, 22, 23) dans l'ensemble actif de stations mobiles (14, 14a, 14b, 20) lors du fonctionnement en transfert intercellulaire en diversité, et pour lesquelles la liaison radio avec la station mobile (14, 14a, 14b, 20) dépasse un seuil de qualité prédéterminé, dépasse un seuil prédéterminé.

5. Support lisible par ordinateur sur lequel se trouvent des instructions exécutables par un processeur pour être mises en oeuvre par un processeur, les instructions exécutant un procédé selon la revendication 1 ou 2.
